# EUROPÄISCHE PATENTANMELDUNG

(11) **EP 2 567 910 A1**
(43) Veröffentlichungstag der Anmeldung: **13.03.2013**
(21) Anmeldenummer: 12006242.7
(22) Anmeldetag: 04.09.2012
(51) Int. Cl.: B65D 65/40, G06K 19/06

(54) **Produktverpackung, zugehörige Verpackungsfolie und Anordnung mit einem Lesegerät**

(30) Priorität: 09.09.2011 DE 202011105502 U
(71) Anmelder: Wipak Walsrode GmbH & Co. KG, 29699 Bomlitz (DE)
(72) Erfinder: Ahrens, Adolf, 29664 Walsrode (DE); Riechert, Enrico, 29664 Walsrode (DE)
(74) Vertreter: Lins, Martina

(57) **Zusammenfassung**

Die Erfindung betrifft eine Produktverpackung (100), oder einen Teil einer Produktverpackung (100), die/der einen aufgedruckten Code aufweist, wobei der Code in Form eines gedruckten Musters (4, 5) aus insbesondere punktförmigen Druckzeichen besteht, die mit einer kohlenstoffhaltigen Druckfarbe auf einem Druckträger aus Papier, Pappe, Metall oder Kunststoff als Bestandteil der Verpackung gedruckt sind und die sich in Bezug auf die Außenseite der Verpackung (100) in oberster Schicht eines gegebenenfalls vorhandenen Druckbildes auf oder neben Bestandteilen des Druckbildes aus nicht-kohlenstoffhaltigen Druckfarben befinden. Dabei ist wenigstens ein Codemuster (4, 5) vorhanden, das ein- oder identisch mehrfach aufgebracht ist. Jedes Codemuster (4,5) oder jede Gruppe aus mehrfach identisch vorhandenen Codemustern codiert für eine Eigenschaft des Produktes oder der Verpackung oder eine Gruppe von Informationen über das Produkt oder die Verpackung. Diese Informationen sind durch eine Vorrichtung (1) auslesbar, um in akustische oder optische Informationen bzw. eine Anzeige umgesetzt zu werden.

Ferner betrifft die Erfindung eine bedruckte Verpackungsfolie, die für die Produktverpackung (100) verwendet werden kann, sowie eine Anordnung aus einer Verpackung (100) und einer Vorrichtung (1).

## Beschreibung

Die Erfindung betrifft eine Produktverpackung, die einen aufgedruckten Code aufweist, eine zugehörige bedruckte Verpackungsfolie, die eingebunden in die Produktverpackung verwendet werden kann, und eine Anordnung mit einer Vorrichtung zur Ausgabe von Informationen, die mit der Vorrichtung, einem Lesegerät, von der Verpackung abgelesen werden.

Verpackungen mit Codierungen zu versehen, ist bekannt. Die US 2,612,994 beschreibt ein System und eine Vorrichtung zum Klassifizieren von Artikeln, die optisch erkennbare außen angebrachte Klassifikationslinien besitzen. Derartige Barcodes werden heute auf fast alle Arten von Verpackungen aufgebracht und dienen zum automatischen Auslesen von Informationen, wie beispielsweise dem Preis oder der exakten Identifikation des Produkts bei der Qualitätskontrolle. Auch ist es bekannt, die Barcodes dafür zu verwenden, dass ein Benutzer Zusatzinformationen über ein Telekommunikationsnetzwerk abrufen kann.

In der Praxis besteht das Problem, dass nicht beliebig viele Informationen mit Hilfe von Barcodes auf Verpackungen untergebracht werden können, da hierfür mehrere das Verpackungsbild störende Barcodes erforderlich wären. Andernfalls wäre ein erheblicher organisatorischer Aufwand erforderlich, um verschiedenste Informationen zentral mit einem Barcode zu kodieren. Solche Informationen können aus verschiedenen Quellen stammen, beispielsweise vom Hersteller des verpackten Produkts, vom Verpackungshersteller, vom Handel usw. Es wird daher immer unerlässlich sein, verschiedene Codes auf einer Verpackung unterbringen zu können.

Ein weiteres Problem besteht darin, dass große Codemuster das Druckbild auf der Verpackung stören, während kleine Druckmuster vom Benutzer unter Umständen nicht zu orten sind. Auch sind Verpackungen häufig flexibel, so dass der Code trotz Oberflächenverwerfungen und der natürlichen Bewegung flexibler Verpackungen lesbar bleiben muss.

Aus DE 20 2009 009 554 U1 ist ein Set aus Druckerzeugnissen und Scannvorrichtung bekannt, mit dessen Hilfe ein auf einem Druckerzeugnis angeordnetes Codemuster gescannt wird. Die Codeinformation kann anschließend in eine Akustikinformation umgewandelt werden. Hierbei ist zu bedenken, dass ein Druckerzeugnis eben ist, so dass die oben genannten besonderen Probleme einer flexiblen Verpackung nicht entstehen. Auch muss auf dem in üblicher Dichte bedruckten Druckerzeugnis nicht die Fülle von Informationen untergebracht werden, die auf einer gegebenenfalls kleinen Verpackung zum Produktinhalt gegeben werden müssen.

Der Erfindung liegt daher die Aufgabe zugrunde, eine Produktverpackung und eine hierfür geeignete Verpackungsfolie zu entwickeln, die mit ein oder mehreren Codes zur Hinterlegung einer Vielzahl von Informationen versehen werden kann und dabei den oben genannten besonderen Schwierigkeiten von Verpackungen gerecht wird.

Diese Aufgabe wird durch eine Produktverpackung nach Anspruch 1, eine hierfür geeignete bedruckte Verpackungsfolie nach Anspruch 6 und die Anordnung aus Verpackung und Lesegerät nach Anspruch 14 gelöst.

Im Rahmen dieser Erfindung liegt der Code, der ein oder mehrere Informationen kodiert, in Form eines gedruckten Codemusters vor, wobei das Muster sich aus ein oder mehreren Druckzeichen zusammensetzt, die das spezielle Codemuster bilden. Die Druckzeichen für das Codemuster sind vorzugsweise klein (Mikrodruckzeichen), insbesondere bedecken sie eine Fläche von je Zeichen nicht mehr als 0,1 x 0,1 mm, weiter vorzugsweise 0,08 x 0,08 mm und sind vorzugsweise punktförmig. In speziellen Ausführungsformen können die Druckzeichen Matrixelemente bzw. Zellen oder Markierungspunkte eines Matrix- oder Dotcodes darstellen. In besonders bevorzugten Ausführungsformen handelt es sich um visuell unauffällige Druckzeichen, die neben dem üblichen Verpackungsaufdruck nicht auffallen. Die Auflösung des Musters in punktförmige Zeichen bietet den zusätzlichen Vorteil, dass das Muster von gewellten Oberflächen besser abgelesen werden kann. Die Ablesesicherheit wird weiter dadurch verbessert, dass ein und dasselbe Codemuster mehrfach nebeneinander aufgedruckt wird.

Das Ablesen und die Umwandlung des Codes kann wie in der DE 20 2009 009 554 U1 beschrieben erfolgen, deren Offenbarungsgehalt in vollem Umfang in die Beschreibung dieser Erfindung mit einbezogen wird. Die Auslesetechnik steht somit zur Verfügung und braucht hier nicht näher beschrieben zu werden.

Gemäß der Erfindung werden für die Druckzeichen des Codemusters kohlenstoffhaltige Druckfarben verwendet, die geeignet sind mit speziellen Infrarotlesegeräten erkannt zu werden, so dass die Muster abgelesen und die zugehörigen Informationen dekodiert und angezeigt werden können. Die Codemuster müssen für das Lesegerät eindeutig erkennbar sein und sich daher vom Verpackungsdruckbild abheben. Zu diesem Zweck wird alles, was an Verpackungsdruck auf der Verpackung außer den Codemustern vorhanden ist, mit nicht-kohlenstoffhaltigen Druckfarben gedruckt.

Der Druckträger, d. h. der Untergrund für die Codemuster aus kohlenstoffhaltigen Druckfarben kann aus Papier, Pappe, Metall oder Kunststoff als Bestandteil der Verpackung bestehen, wobei sich die Druckzeichen des Codemusters in Bezug auf die Außenseite (bzw. Oberseite) der Verpackung in oberster Schicht eines gegebenenfalls vorhandenen Druckbildes oder auf oder neben Druckbildbestandteilen aus nicht-kohlenstoffhaltigen Druckfarben befinden. Eine nicht-kohlenstoffhaltige Druckfarbe des sonstigen Verpackungsbildes kann demnach ebenfalls Untergrund für die Druckzeichen des Codemusters sein. Die Codemuster können ansonsten auch auf völlig unbedruckten Verpackungen vorhanden sein, z. B. für automatisierte Fertigungs- oder Sortieranlagen.

Auf der Verpackung sind Codemuster vorhanden, die ein- oder identisch mehrfach aufgebracht sind, wobei jedes Codemuster (oder jede Gruppe aus mehrfach identisch vorhandenen Codemustern) für eine Eigenschaft des Produkts oder der Verpackung oder eine Gruppe von Informationen über das Produkt oder die Verpackung kodiert, die durch ein Infrarotlesegerät auslesbar ist, um in akustische oder optische Informationen umgesetzt zu werden.

Die Codemuster bzw. die Druckzeichen aus kohlenstoffhaltiger Druckfarbe sind dabei nie durch andere Druckfarben abgedeckt, damit sie an der Außenseite der Verpackung ablesbar sind. Die Druckzeichen befinden sich immer in oberster Schicht auf oder neben anderen Druckschichten. Sie können nach außen (an der Folienoberseite) durch transparente Lacke oder Folien abgedeckt sein.

Bei der Verpackung handelt es sich in besonders bevorzugter Ausführungsform um eine Folienverpackung. Diese kann z. B. in Form eines Schlauchbeutels, einer Schalenverpackung, aus Mulde und Deckel eines Vierrandsiegelbeutels oder eines Kettenbeutels vorliegen.

Es kann sich bei der Produktverpackung auch um eine Verbundverpackung mit ein oder mehreren der Materialien Kunststoff, Pappe, Papier, Wellpappe, Karton, Metall oder Textilmaterialien handeln. Die mit dem Code bedruckte Verpackung kann eine Umverpackung sein, insbesondere eine Papp- oder PapierUmverpackung. Die bedruckte Verpackung kann ebenso eine Dose oder eine Tube, eine Faltschachtel, ein Sleeve für Flaschen, Gläser, Tuben oder Dosen, ein Etikett oder ein Produktdisplay sein. Als Verpackungsgut kommt jeder kommerzielle Artikel in Frage, bevorzugt handelt es sich bei der Verpackung um eine Lebensmittelverpackung.

Selbstverständlich ist es ausreichend, wenn das oder die Codemuster auf einem Teil der Verpackung aufgebracht sind. Dabei kann es sich auch um einen nachträglich lösbaren oder einen mit einer Verpackung vor Verkauf oder Auszeichnung verbindbaren Verpackungsteil handeln.

Die Erfindung umfasst daher auch Verpackungsteile (insbesondere aller vorgenannten Verpackungen), wie insbesondere alle Arten von Umverpackungen, z. B. Umkartons, manschettenartige Umverpackungen, z. B. Sleeves für Flaschen, Gläser, Dosen oder Tuben, Hüllen, ein- und ausfaltbare Verpackungsteile mit und ohne Perforationen, Klappverpackungen einschließlich separate Umverpackungsteile wie Produktdisplays, Ständer, Aufsteller und Präsentationsgestelle, sowie Etiketten und Verpackungsverschlüsse, insbesondere Beutelverschlüsse.

Wie oben bereits angesprochen, sollen die Codemuster vorzugsweise auf der Verpackung für einen Betrachter optisch nicht oder in Kontrast zum Druckbild nicht hervortretend wahrnehmbar sein. Die einzelnen Druckzeichen des Codemusters beanspruchen vorzugsweise eine Fläche von nicht mehr als 0,1 x 0,1 mm, weiter vorzugsweise 0,08 x 0,08 mm und sind gruppiert zu den Codemustern zusammengefasst. Gemäß einem Aspekt der Erfindung bilden sie dabei eine Art Hintergrundmuster, das optisch unauffällig ist. Das Hintergrundmuster kann sich über die ganze Verpackung erstrecken. Es ist vorzugsweise nicht erkennbar, dass sich hierin verschiedene Codemuster verbergen. Die Codemuster können auch an verschiedenen Positionen, d.h. im Bereich bestimmter Fenster um einzelne Aufdrucke auf der Verpackung angeordnet sein, insbesondere in Zuordnung zu solchen Aufdrucken, zu deren Informationsgehalt durch die Codierung weitere Informationen geliefert werden.

Bei dem Druckbild aus nicht-kohlenstoffhaltiger Farbe kann es sich im einfachsten Fall um eine Farbschicht handeln oder um ein konturiertes, auch mehrfarbiges und/oder gefenstertes Druckbild, das Schrift und Motive aus Bildern, Fotos oder Logos sowie gemischte Motive mit Schrift- und Bildbestandteilen enthalten kann.

Gemäß einem besonders bevorzugten Ausführungsbeispiel liegt ein erstes ein- oder mehrfach identisch aufgebrachtes Codemuster in unmittelbarer räumlicher Zuordnung zu einer auf die Verpackung gedruckten Produktbezeichnung, Herstellerbezeichnung und/oder Marke vor, insbesondere auch in Form eines Logos. Dem liegt die Idee zugrunde, dass praktisch auf jeder Produktverpackung eine Marke oder zumindest ein besonders hervorgehobener Produktname vorhanden ist. Der Verbraucher wird dies sofort erkennen. Am Ort dieses Logos, Produktnamens, der Herstellerbezeichnung oder Marke ist gemäß diesem Aspekt der Erfindung eine erste Information hinterlegt, die Angaben zu weiteren auf derselben Verpackung hinterlegten Informationen in Form von Codemustern gibt, d.h., die mit anderen Codes derselben Verpackung korreliert ist. Auch in der ersten Information kann zusätzlich bereits eine Produktinformation abgelegt sein. Wesentlich für diese erste Information ist jedoch das Vorhandensein einer Aussage zu weiteren Informationen auf derselben Verpackung.

Der Verbraucher kann auf diese Weise durch Anvisieren der ersten Codierung in Zuordnung zu der Marke, der Produktbezeichnung oder der Herstellerbezeichnung, eine Information erhalten, die auf die Orte weiterer Codierungen auf der Verpackung verweist. Interessante Informationen können vom einzelnen Verbraucher so gezielt ausgewählt werden. Die übrigen Codemuster können entweder an charakteristischen, für den Verbraucher leicht aufzufindenden Positionen der Verpackung angeordnet sein, oder sie sind durch spezielle lokale Druckbilder gekennzeichnet, die das Vorhandensein diese Zusatzinformation für den Verbraucher anzeigen.

Die Codemuster können auch an beliebigen, eindeutig festgelegten Positionen der Verpackung oder eines für die Verpackung vorgesehenen Verpackungsmaterials (insbesondere einer Verpackungsfolie) angebracht sein, die nicht ohne weiteres erkennbar sein müssen. Solche Codemuster können beispielsweise nach in Erfahrung bringen der Positionsangabe (der Koordinaten) des Codes oder von einem dafür eingerichteten speziellen Lesegerät erkannt und ausgelesen werden. Diese Codes eignen sich beispielsweise für die Qualitätskontrolle, für die Rückverfolgung einer Packung im Handel oder beim Produzenten, die Zuordnung des Herstellens und der Materialien, einschließlich der Produktchargen oder Verpackungsmaterialchargen, usw.. Auch für diese Codes können, wie vorher schon beschrieben, in ein Druckbild integriert werden, müssen jedoch für reine Prüfzwecke nicht anhand eines Hinweises im Druckbild identifizierbar sein.

Die Aufgabe der Erfindung wird weiterhin gelöst mit Hilfe einer bedruckten Verpackungsfolie zur Verwendung in einer der oben beschriebenen Produktverpackungen. Die Verpackungsfolie enthält erfindungsgemäß wenigstens eine im Tiefdruck, Flexodruck oder Offsetdruck bedruckte Folien- oder Papierschicht - eine Druckträgerschicht, die zumindest mit den Druckzeichen des Codes aus kohlenstoffhaltiger Farbe bedruckt ist. Diese Druckträgerschicht kann als Einzelfolie vorliegen. Die Verpackungsfolie kann auch durch eine Einzelfolie gebildet sein, die mit einem Verpackungsdruckbild und zusätzlich mit wenigstens einem Codemuster in der oben schon beschriebenen Weise bedruckt ist. Alternativ kann die Verpackungsfolie eine Mehrschichtfolie sein, die wenigstens eine Druckträgerschicht enthält. Hierbei kann es sich auch um eine Verbundfolie aus mehreren Materialien, z. B. Kunststoff und Papier oder Kunststoff und Metall, handeln. Gemäß einem weiteren Aspekt der Erfindung können mehrere bedruckte Folien in einer Mehrschichtfolie vorliegen, die durch Heißlaminieren oder Kaschieren mit Haftvermittler oder Kaschierkleber zusammengefügt werden und insgesamt ein Druckbild ergeben. Im Falle von mehreren Druckträgerschichten ist zumindest die oberste Druckträgerschicht eine transparente Folie.

In Weiterbildung der Erfindung kann vorgesehen sein, dass ein ein- oder mehrfach identisch aufgebrachtes Codemuster an einer auf einer Verpackungsmaschine erkennbaren und auslesbaren Position aufgebracht ist. Solche Codemuster können beispielsweise am Folienrand angeordnet sein. Sie ermöglichen z. B. die eindeutige Identifizierung des richtigen Materials auf der Verpackungsfolie.

Allgemein kann der Druck als Frontal- oder Schöndruck erfolgen. Die Codemuster sind dabei, wie oben im Zusammenhang mit der Verpackung bereits angegeben, in der obersten für die spätere Verpackung nach außen gerichteten Schicht angeordnet oder in der obersten Schicht des Druckbildes, sofern ein zusätzliches Druckbild vorhanden ist. Die Druckzeichen aus der kohlenstoffhaltigen Druckfarbe sind dabei auf der Außenseite der Folie freiliegend oder unter einer transparenten Deckschicht oder einem Lack angeordnet.

Vorzugsweise ist die Druckträgerfolie ausgewählt aus der Gruppe der polyolefin-, insbesondere polypropylen-, polyethylen-, polyamid- und polyesterbasierten Folien. Andere bekannte transparente Polymere, Polymermischungen und Copolymerisate sind jedoch nicht ausgeschlossen. Bevorzugt sind polyesterbasierte Folien ausgewählt aus Polyethylenterphthalat (PET, amorph oder kristallin), Polybutylenterephthalat (PBT), Polycaprolacton (PCL) und Polybutylenadipat (PBA). Bevorzugt sind weiterhin Polyolefinfolien, wie in der Verpackungsindustrie üblich aus Polyethylen, Polypropylen, Copolymeren dieser Verbindungen mit einem überwiegenden Gehalt an Ethylen und/oder Propyleneinheiten oder Mischungen der Homopolymere und/oder der Copolymere.

Unter "basiert" wird hier verstanden, dass die Folie bzw. die Schicht das genannte Polymer ausschließlich oder aber zum überwiegenden Teil enthält, so dass der Fachmann das "Leitpolymer" als das wesentliche Polymer der Folie oder der Schicht ansehen würde. Neben den Polymerisationeinheiten des hauptsächlich vorhandenen Polymers können andere Einheiten vorhanden sein, d.h. es können Mischungen verschiedener Polymere und/oder Copolymerisate zwischen oder mit anderen Polymeren in der Folie vorliegen. Diese anderen Polymere können eingemischt oder in Form von statistischen oder Blockpolymeren einpolymerisiert sein. Die Folien können weiterhin die üblichen Additive enthalten.

Die Druckträgerfolie besitzt vorzugsweise eine Dicke von 5 bis 50 µm, weiter bevorzugt von 10 bis 30 µm. Bei mehrschichtigem Aufbau liegt die Gesamtfoliendicke im Allgemeinen zwischen 40 und 150 µm, bevorzugt von 55 und 120 µm, besonders bevorzugt von 55 bis 100 m. Die Gesamtschichtdicke einer Mehrschichtfolie beträgt vorzugsweise bis zu 300 µm. Eine transparente Deckschicht oberhalb der Codemuster soll nicht dicker als ca. 50 µm sein.

Gemäß einer besonders bevorzugten Ausführungsform ist die Druckträgerfolie eine mono- oder biaxial gereckte Folie.

Die bedruckte Verpackungsfolie nach der Erfindung kann abschließend druckbildseitig lackiert oder mit wenigstens einer transparenten Deckschicht kaschiert sein. Hierdurch werden das Druckbild und insbesondere die außenliegenden Druckzeichen des Codemusters gegen Beschädigungen und Manipulationen geschützt. Die Schutzschicht sollte thermostabil, kratzfest und hochtransparent sein. Geeignet ist beispielsweise eine aufkaschierte Polypropylenschicht, die zusätzlich mono- oder biaxial gereckt sein kann. Anstelle der Lackierung könnte auch eine abschließende, transparente, thermisch und mechanisch besonders stabile Deckschicht aufgedruckt werden. Eine geeignete Lackierung wäre zum Beispiel eine 2-Komponenten-Polyurethanlackierung. Gemäß der Erfindung ist die Folie, bzw. wenigstens die Deckschicht oder sämtliche Schichten oberhalb der Codierungsmuster, transparent. Dies bedeutet primär, dass die transparente Schicht oder die transparenten Schichten der Folie mit bloßem Auge "durchsichtig" erscheinen.

Die Transparenz von Folien kann jedoch auch quantifiziert werden. Dies wird mit Hilfe von Densitometern mit Methoden gemessen, die dem Fachmann auf dem Gebiet geläufig sind. Als Maß für die Transparenz kann die optische Trübung verwendet werden. Die Trübung wird bevorzugt nach der ASTM-Prüfnorm D 1003-61 m, Procedure A, gemessen. Zuvor sollte das Messgerät mit Trübungsnormalen zwischen 0,3 und 34 % Trübung kalibriert werden. Als Messinstrument eignet sich beispielsweise ein Hazemeter der Firma Gyk-Gardner mit Ulbricht-Kugel, das in einem Raumwinkel von 8 ° bis 160 ° eine integrierte Messung der diffusen Lichtdurchlässigkeiten gestattet.

Die Deckfolie oder die Summe der Deckfolien sollte eine Trübung von weniger als 10 %, bevorzugt weniger als 5 %, weiter bevorzugt weniger als 3 % und insbesondere weniger als 0,7 % (gemessen nach dem oben angegebenen Verfahren) besitzen. Bevorzugt sind Deckfolien bzw. im Konterdruck bedruckte Druckträgerfolien mit Trübungswerten von zwischen 8 und 0,5.

Gemäß einer Weiterentwicklung der Erfindung besitzt die Verpackungsfolie zusätzlich eine Siegelschicht. Die Siegelschicht kann sich vorzugsweise auf der Unterseite der Verpackungsfolie befinden. Die Bezeichnungen "Oberseite" und "Unterseite" beziehen sich dabei auf die für die spätere Verwendung vorgesehene Folienausrichtung. Die Oberseite ist die Seite, die an einer Verpackung von außen betrachtet werden kann. Die Codemuster liegen im Sinne dieser Definition immer oben und oberhalb anderer opaker Bestandteile oder der Druckfarben.

Die Verpackungsfolie kann vorzugsweise zusätzlich eine Gas-, Aroma- oder Feuchtigkeits-Sperrschicht enthalten, insbesondere innerhalb der Siegelschicht.

Solche Sperrschichten sind bekannt und besitzen beispielsweise den Aufbau:
Siegelschicht-Haftvermittler-Sperrschicht-Haftvermittler-Siegelschicht.

Für die Siegelschichten werden im Allgemeinen polyolefinische Polymere und insbesondere PE- oder PP-basierte Folien verwendet. Für die Gas-, Aroma- oder Feuchtigkeits-Sperrschicht sind dem Fachmann ebenfalls Materialien bekannt, die eine Barrierewirkung gegen den Durchtritt von Gasen und Dämpfen bewirken. Eine Ethylen-Vinylalkohol-Copolymer (EVOH)-basierte Schicht wird besonders bevorzugt.

Die Erfindung umfasst weiterhin eine Anordnung aus einer erfindungsgemäßen Verpackung oder einem Produktdisplay für mit der erfindungsgemäßen Verpackung verpackte Produkte und einer Vorrichtung, wie sie grundsätzlich in dem deutschen Gebrauchsmuster DE 20 2009 009 554 U1 beschrieben ist.

Die mit der erfindungsgemäßen Verpackung in einer Anordnung zusammengestellte Vorrichtung zur Ausgabe von optischen oder akustischen Informationen weist mindestens einen Sensor auf, der zum Scannen mindestens eines auf der Verpackung angeordneten Codemusters eingerichtet ist, wobei die Vorrichtung eine mit dem Sensor verbundene Auswerteeinheit hat, die zum Ermitteln einer Code-Information aus dem gescannten Codemuster eingerichtet ist, und einen mit der Auswerteeinheit verbundenen Speicher zum Hinterlegen optischer und/oder akustischer Informationen, und wobei die Auswerteeinheit zum Ermitteln mindestens einer in dem Speicher hinterlegten Information in Abhängigkeit der ermittelten Code-Information ausgebildet und die Vorrichtung zur Ausgabe der ermittelten Informationen eingerichtet ist. In dem Falle einer dem Codemuster zugeordneten Akustik-Information gibt die Auswerteeinheit diese Information mit Hilfe eines Lautsprechers aus, optische Informationen werden mit hierfür geeigneten Anzeige- bzw. Ausgabeeinrichtungen, wie z. B. einem Monitor, ausgegeben/angezeigt.

Der Sensor ist ein Infrarotsensor, der für die Lichtreflexion von mit kohlenstoffhaltiger Druckfarbe gedruckten Oberflächen empfindlich ist.

In bevorzugter Ausführungsform ist die Vorrichtung, d. h. das Lesegerät, ein mobiles Handgerät.

In Weiterbildung der Erfindung ist die Auswerteeinheit der Vorrichtung zur Ermittlung der Code-Informationen des gescannten Codemusters mittels eines Bilderkennungsverfahrens eingerichtet.

Im Folgenden wird die Erfindung anhand von Figuren näher erläutert, die allein illustrativen Zwecken dienen. Es zeigen
- Figur 1 -: eine schematische Darstellung der Vorrichtung zur Ausgabe optischer oder akustischer Informationen und eines Teils einer Verpackung mit Codemuster;
- Figur 2 -: schematische Darstellung eines Codemusters;
- Figur 3 -: schematische Querschnittsansicht eines Verpackungsfolienabschnitts (1. Ausführungsbeispiel);
- Figur 4 -: schematische Querschnittsansicht eines Verpackungsfolienabschnitts (2. Ausführungsbeispiel).

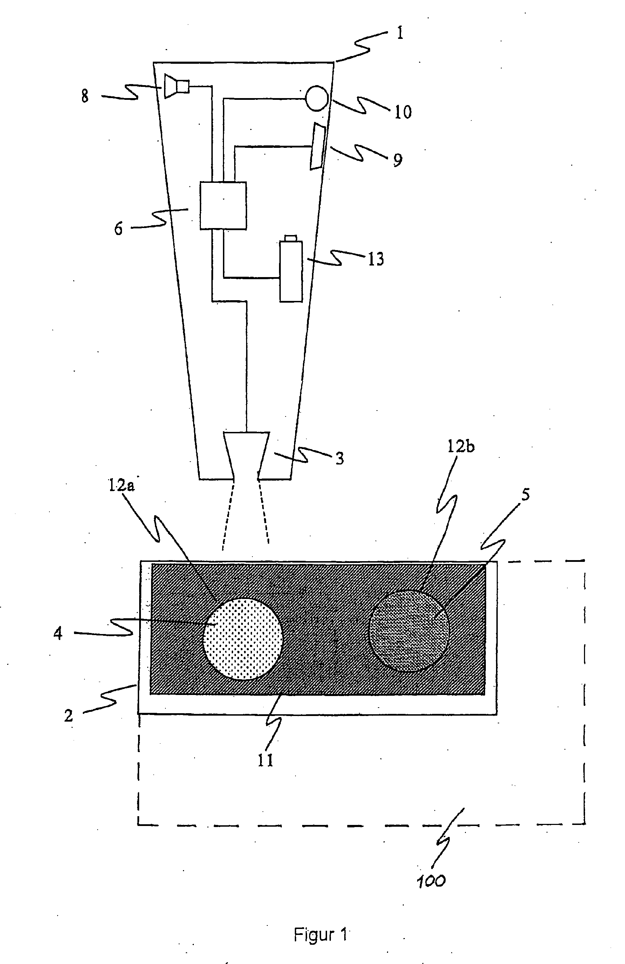

Figur 1 zeigt schematisch eine Anordnung bestehend aus einer Vorrichtung 1 und einem Teil 2 einer Verpackung 100, der mit einem Code in Form gedruckter Muster versehen ist. In diesem Beispiel ist der Verpackungsteil 2 ein Etikett. Die Vorrichtung 1 ist als mobiles Handgerät ausgebildet und weist an einem unteren Ende einen optischen Sensor 3 auf, der zum Scannen eines entsprechenden Codemusters 4, 5 eingerichtet ist. Der optische Sensor 3 der Vorrichtung 1 ist dabei mit einer Auswerteeinheit 6 verbunden, welche die gescannten Informationen des optischen Sensors 3 empfängt und entsprechend auswertet. In einem Speicher 7, der ebenfalls in der Vorrichtung 1 angeordnet ist, sind eine Reihe entweder akustischer Informationen wie Geräusche, Sprache oder Musik, oder optischer Informationen wie Bilder oder Text hinterlegt, die jeweils einer bestimmten Zahl zugeordnet sind. Die gesamte Vorrichtung 1 wird dabei mittels eines Li-Akkus 13 mit Energie versorgt.

Empfängt die Auswerteeinheit 6 nun von dem optischen Sensor 3 entsprechende Bildinformationen, so wertet sie diese aus und ermittelt das Codemuster 4.

Aus diesem Codemuster lässt sich dann die in diesem Codemuster 4 codierte Code-Information ermitteln, welche in diesem Ausführungsbeispiel eine Zahl ist. Die Auswerteeinheit 6 ermittelt nun in Abhängigkeit dieser Zahl die dieser Zahl zugeordnete Information aus dem Speicher 7 und gibt sie dann im Falle einer akustischen Information mit Hilfe des Lautsprechers 8 aus, im Falle einer optischen Information mit Hilfe eines in diesem Beispiel nicht dargestellten zusätzlichen optischen Anzeigegeräts, z. B. eines Monitors.

Die Vorrichtung 1 weist des Weiteren einen USB-Anschluss 9 auf, der ebenfalls mit der Auswerteeinheit 6 verbunden ist und dazu geeignet ist, entsprechende Informationen in den Speicher 7 zu laden. Desweiteren weist die Vorrichtung 1 noch einen Audiosignal-Ausgang 10 auf, an dem beispielsweise Kopfhörer oder andere zur Wiedergabe von akustischen Signalen geeignete Geräte angeschlossen werden können.

Auf dem in Figur 1 dargestellten Verpackungsteil 2 ist ein Motiv 11 als Teil eines Druckbilds aufgedruckt, welches beispielsweise ein Logo, ein auf der Verpackung aufgedruckter Text oder ein Bild sein kann. Innerhalb des Motives 11 befinden sich unterschiedlicher Teilbereiche 12a, 12b, die beispielsweise ein Teil des Motives 11 sein können. So ist es beispielsweise denkbar, dass das Teilmotiv 12a ein Text ist, während das Teilmotiv 12b ein Logo oder beispielsweise eine Länderflagge darstellt. Innerhalb des Teilmotives 12a ist ein Codemuster 4 angeordnet, welches eine erste Code-Information codiert. In dem Teilbereich 12b ist desweiteren ein Codemuster 5 angeordnet, welches sich von dem Codemuster 4 des Teilbereichs 12a unterscheidet und eine zweite Code-Information codiert. Bei den Code-Informationen der Codemuster 4 und 5 sind jeweils in dem Speicher 7 unterschiedliche Informationen zugeordnet.

Wird nun mit der Vorrichtung 1 der Teilbereich 12a des Motivs 11 gescannt, so wird das Codemuster 4 von dem optischen Sensor 3 aufgenommen und von der Auswerteeinheit 6 dekodiert, so dass die Auswerteeinheit die erste Code-Information ermittelt. Eine entsprechende Akustik-Information wird über den Lautsprecher 8 ausgegeben. Wird jedoch innerhalb des gleichen Motives 11 der Teilbereich 12b mit der Vorrichtung 1 gescannt, so wird das Codemuster 5 von dem Sensor 3 aufgenommen, so dass die Vorrichtung 1 nunmehr eine zweite Akustik-Information ausgibt.

Je nachdem, welche Bereiche innerhalb des Motives gescannt werden, werden unterschiedliche Akustik-Informationen ausgegeben.

Gemäß einem weiteren, nicht dargestellten Ausführungsbeispiel ist es möglich ein Motiv 11 mehrfach mit demselben, identisch wiederholten Codemuster 4 oder 5 zu versehen. Dies erleichtert es dem Benutzer der Vorrichtung 1, die hinterlegte Information aufzufinden, besonders bei einem flächenmäßig ausgedehnten Motiv 11, z. B. in Form von Text.

Gemäß einem weiteren, nicht dargestellten Ausführungsbeispiel ist es vorgesehen, dass die mittels eines ersten Codemusters 4 ausgelesene Information den Benutzer, gegebenenfalls zusätzlich zu einer ersten Sachinformation, auf eine zweite Information, deren Codemuster 5 an einem anderen Ort auf der Verpackung 100 hinterlegt ist, verweist. Auf diese Weise ist es möglich, auch auf begrenztem Raum eine Vielzahl von Informationen zugänglich zu machen, die der Benutzer je nach Bedarf abruft.

Das Codemuster ist in dem hier gezeigten Beispiel derart in das Motiv integriert, dass durch die Vielzahl von unterschiedlichen Codemustern die Wahrnehmung des Motivs nicht beeinträchtigt wird bzw. die grafische Darstellung des Motivs nicht verändert wird. Mit anderen Worten, die innerhalb des Motivs angeordneten Codemuster sind so ausgebildet, dass sie von dem menschlichen Auge nicht wahrnehmbar sind. Dies liegt unter anderem daran, dass die Codemuster derart klein sind, dass sie bei einer normalen Betrachtungsentfernung aufgrund der Physiologie des Auges nicht mehr wahrgenommen werden können.

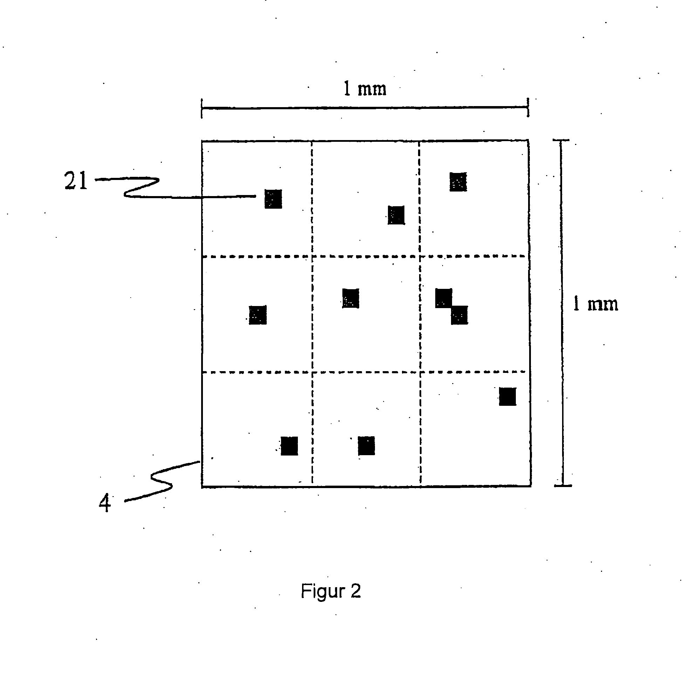

Figur 2 zeigt schematisch die Abbildung eines Codemusters, das genau eine Code-Information codiert. Das Codemuster besteht dabei aus einer Matrix, innerhalb derer Druckzeichen 21 (hier in Form von Zellen eines Matrix- bzw. DotCodes) angeordnet sind. Die Druckzeichen 21, die Matrixelemente oder Zellen des Codes darstellen, haben dabei in etwa eine Größe, die der Auflösung eines Druckers von 600 dpi entspricht. Eine solche Zelle hat somit ungefähr eine Ausdehnung von 0,04 mm, was normalerweise von einem menschlichen Auge innerhalb eines größeren Motivs nicht mehr wahrgenommen werden kann. Je nach dem, wo die Zellen innerhalb der Matrix des Codemusters 4, 5 angeordnet sind, ergeben sich unterschiedliche Codierungen und somit unterschiedliche Code-Informationen.

Um die Codemuster innerhalb des Motivs weiter zu "verstecken" erhalten die einzelnen Zellen eine Farbe, die in Abhängigkeit der farblichen Gestaltung des Motivbereichs gewählt wird, innerhalb dessen das Codemuster angeordnet ist. So ist es beispielsweise denkbar, dass bei einem hellblauen Motivhintergrund die Zellen durch Druckzeichen 21 aus einer dunkelblauen kohlenstoffhaltigen Farbe gebildet werden, so dass die Zellen sich besser in das Gesamtmotiv integrieren und somit nicht mehr wahrnehmbar sind. Des Weiteren werden in diesem Beispiel eines Codemusters im Verhältnis zur Gesamtgröße des Codemusters 4, 5 relativ wenig Druckzeichen 21 angeordnet, um möglichst wenig Irritationen innerhalb des Motivs hervorzurufen.

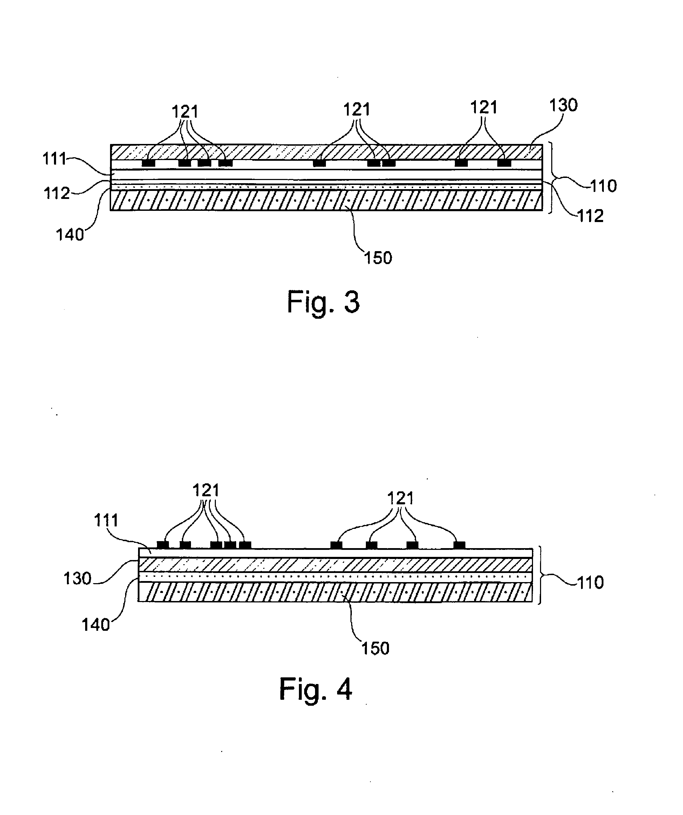

Figur 3 zeigt ein erstes Ausführungsbeispiel für eine bei der Verpackung 100 oder eines kodierten Teils davon verwendbare Verpackungsfolie 110. Es ist ein Abschnitt der Verpackungsfolie 110 in einer schematischen Querschnittsdarstellung gezeigt. Die Verpackungsfolie 110 ist hier eine Kunststoffmehrschichtfolie, wie sie in der Verpackungsindustrie u. a. für Lebensmittelverpackungen üblich ist, wobei ein Konterdruckverfahren angewendet wurde, um die Druckfarben zwischen den Schichten der Folie anzuordnen.

Der grundsätzliche Folienaufbau der mehrschichtigen Verpackungsfolie 110 von außen nach innen, d. h. von der dem Betrachter zugewandten Verpackungsseite aus in Richtung des Verpackungsguts gesehen, ist wie folgt.
- Druckträger 130, transparent
- Druckzeichen 121, gedruckt mit kohlenstoffhaltiger Druckfarbe, die vom Infrarotsensor des Lesegeräts erkannt werden kann
- Farbschicht 111 des Druckbildes aus nicht kohlenstoffhaltiger handelsüblicher Tiefdruckfarbe
- Hintergrundschicht 112 zur Hinterlegung der Farbschicht 111
- Kaschierkleberschicht 140
- Siegelschicht 150, gegebenenfalls als Coextrusionsschicht mit integrierter Sperrschicht

Bei diesem Ausführungsbeispiel sind das Druckbild aus der Farbschicht 111 und die Druckzeichen 121 für die Codemuster durch die konterbedruckte transparente Druckträgerschicht 130 geschützt. Die Siegelschicht 150 dient als Funktionsschicht für die Haltbarkeit und die Herstellung der Verpackung.

Materialien dieses Ausführungsbeispiels:

| | |
|---|---|
| Druckträger: | 2fach orientiertes bzw. gerecktes Polyethylenteraphthalat (BOPET), Dicke 12 µm |
| Druckzeichen des Codemusters: | Mikropunkte gedruckt mit Farbsystem: Siegwerk NC 189 (Siegwerk Druckfarben AG, Siegburg DE), kohlenstoffhaltige Druckfarbe |
| Farbschicht für Druckbild: | handelsübliches Tiefdruckfarbsystem (kohlen stofffrei, rußfrei) |
| Hinterlegungsschicht: | weiße Hinterlegung aus einem handelsüblichen Tiefdruckfarbsystem |
| Kaschierkleber: | handelsüblicher lösungsmittelfreier (LF) Kaschierkleber |
| Siegelschicht: | Polyolefinsiegelschicht mit integrierter Sperrschicht, hier: PE-Haftvermittler-EVOH-Haftvermittler-PE |

Figur 4 zeigt ein weiteres Ausführungsbeispiel für eine innerhalb der Verpackung 100 oder des kodierten Teils davon verwendbare Verpackungsfolie 110 bzw. eines mehrschichtigen Verpackungsmaterials, das ein Verbundmaterial sein kann. In diesem Falle ist der Druckträger 130 im Frontaldruck bedruckt. Es kann sich um eine beliebige, auch nicht transparente Verpackungsfolie insbesondere eine Polyolefinfolie handeln, aber auch um eine Papp- oder Papierschicht. Der Druckträger 130 ist mit der nicht-kohlenstoffhaltigen Druckfarbe in Form einer Farbschicht bzw. eines Druckbildes 111 bedruckt. Das Druckbild 111 ist wiederum frontal mit den punktförmigen Druckzeichen 121 bedruckt, die das Codemuster bilden. Druckfarbe und Codemuster sind hier nicht durch weitere Maßnahmen geschützt, könnten jedoch beispielsweise mit einem dünnen Sprühlack oder einer zusätzlichen transparenten Schicht versehen sein. Gegen den Druckträger 130 ist auf seiner Rückseite eine Siegelschicht 150 kaschiert. Die Kaschierkleberschicht 140 besteht aus einem handelsüblichen hierfür geeigneten insbesondere lösungsmittelfreien Kaschierkleber. Die Materialien können im Übrigen dieselben sein, wie schon zu Figur 3 beschrieben.

### Bezugszeichenliste

- 1: Vorrichtung (zur Ausgabe optischer oder akustischer Informationen)
- 2: Teil einer Verpackung (Etikett)
- 3: Sensor
- 4: Codemuster
- 5: Codemuster
- 6: Auswerteeinheit
- 7: Speicher
- 8: Lautsprecher
- 9: USB-Anschluss
- 10: Audiosignal-Ausgang
- 11: Motiv (Druckbildteil
- 12a,b: Motivteilbereich
- 13: Akku
- 21: Druckzeichen
- 100: Verpackung
- 110: Verpackungsfolie/Verpackungsmaterial
- 111: Motiv aus kohlenstofffreier Druckfarbe bzw. Druckbildbestandteil/ Farbschicht
- 112: Hintergrundschicht zu Druckbild 111
- 121: Druckzeichen aus kohlenstoffhaltiger Druckfarbe
- 130: Druckträger
- 140: Klebstoffzwischenschicht
- 150: Siegelschicht

## Patentansprüche

1. Produktverpackung (100), oder Teil einer Produktverpackung (100), die/der einen aufgedruckten Code aufweist,
**dadurch gekennzeichnet,**
**dass** der Code in Form eines gedruckten Musters (4, 5) aus insbesondere punktförmigen Druckzeichen (21; 121) besteht, die mit einer kohlenstoffhaltigen Druckfarbe auf einem Druckträger (130) aus Papier, Pappe, Metall oder Kunststoff als Bestandteil der Verpackung gedruckt sind und die sich in Bezug auf die Außenseite der Verpackung (100) in oberster Schicht eines gegebenenfalls vorhandenen Druckbildes auf oder neben Bestandteilen (111) des Druckbildes aus nicht-kohlenstoffhaltigen Druckfarben befinden,
wobei wenigstens ein Codemuster (4, 5) vorhanden ist, das ein- oder identisch mehrfach aufgebracht ist, und wobei jedes Codemuster (4,5) oder jede Gruppe aus mehrfach identisch vorhandenen Codemustern für eine Eigenschaft des Produktes oder der Verpackung oder eine Gruppe von Informationen über das Produkt oder die Verpackung codiert, die durch eine Vorrichtung (1) auslesbar ist, um in akustische oder optische Informationen umgesetzt zu werden.

2. Produktverpackung (100) oder Teil davon nach Anspruch 1, **dadurch gekennzeichnet, dass** es sich um eine Folienverpackung, insbesondere in Form eines Schlauchbeutels, einer Schalenverpackung aus Mulde und Deckel, eines Vierrandsiegelbeutels oder eines Kettenbeutels handelt, oder um eine Verbundverpackung mit ein oder mehreren der Materialien Kunststoff, Pappe, Papier, Wellpappe, Karton, Metall, Textilmaterialien, eine Papp- oder Papierumverpackung, eine Dose, eine Tube, eine Faltschachtel, ein Etikett oder Sleeve, insbesondere für Flaschen und Dosen, einen Umkarton, eine sonstige Umverpackung sowie um deren Teile, einschließlich separierbarer Verpackungsbestandteile wie Produktdisplays.

3. Produktverpackung (100) oder Teil davon nach Anspruch 1 oder 2, **dadurch gekennzeichnet, dass** die Codemuster (4,5) auf der Verpackung (100) für einen Betrachter optisch nicht oder im Kontrast zum Druckbild (111) nicht hervortretend wahrnehmbar sind, wobei die einzelnen Druckzeichen (21; 121) des Codemusters (4, 5) vorzugsweise eine Fläche von nicht mehr als 0,1 x 0,1 mm belegen.

4. Produktverpackung (100) oder Teil davon nach einem der Ansprüche 1 bis 3, **dadurch gekennzeichnet, dass** ein erstes ein- oder mehrfach identisch aufgebrachtes Codemuster (4, 5) in unmittelbarer räumlicher Zuordnung zu einer auf die Verpackung gedruckten Produktbezeichnung, Herstellerbezeichnung und/oder Marke, insbesondere auch in Form eines Logos, gedruckt vorliegt.

5. Produktverpackung (100) oder Teil davon nach Anspruch 4, **dadurch gekennzeichnet, dass** die Codierung in Zuordnung zu Produktbezeichnung, Herstellerbezeichnung und/oder Marke mit einer Information korreliert ist, die auf Orte weiterer Codierungen auf der Verpackung verweist.

6. Bedruckte Verpackungsfolie (110) zur Verwendung in einer Produktverpackung (100) nach einem der Ansprüche 1 bis 5, **gekennzeichnet durch** wenigstens eine im Tiefdruck, Flexodruck oder Offsetdruck bedruckte Folien- oder Papierschicht, wobei diese Druckträgerschicht (130) im Frontal- oder Schöndruck oder im Konterdruck bedruckt ist, wobei der Druck Druckzeichen (21; 121) für ein oder mehrere Codemuster (4, 5) aus einer kohlenstoffhaltigen Druckfarbe enthält, die sich bezüglich der bei der späteren Verwendung außen an der Verpackung liegenden Seite in oberster Schicht des gegebenenfalls vorhandenen Druckbildes auf oder neben Druckbildbestandteilen (111) aus nicht-kohlenstoffhaltigen Druckfarben befinden.

7. Verpackungsfolie (110) nach Anspruch 6, **dadurch gekennzeichnet, dass** ein ein- oder mehrfach identisch aufgebrachtes Codemuster (4, 5) an einer auf einer Verpackungsmaschine erkennbaren und auslesbaren Position aufgebracht ist.

8. Verpackungsfolie (110) nach Anspruch 6 oder 7, **dadurch gekennzeichnet, dass** die Druckträgerfolie (130) ausgewählt ist aus der Gruppe der polyolefin-, insbesondere polypropylen-, polyethylen-, polyamid- oder polyesterbasierten Folien.

9. Verpackungsfolie (110) nach einem der Ansprüche 6 bis 8, **dadurch gekennzeichnet, dass** die Druckträgerfolie (130) eine mono- oder biaxial gereckte Folie ist.

10. Verpackungsfolie (110) nach einem der Ansprüche 6 bis 9, **dadurch gekennzeichnet, dass** ein Druckbild (11; 111) oder Druckzeichen (21; 121) aus kohlenstoffhaltiger Druckfarbe, welche sich auf der bei Verwendung in der Verpackung außen liegenden Folienseite befinden, lackiert oder mit wenigstens einer transparenten Deckschicht kaschiert sind.

11. Verpackungsfolie (110) nach einem der Ansprüche 6 bis 10, **dadurch gekennzeichnet, dass** die Druckträgerfolie (130) mit einer Transparenz von wenigstens 10 % transparent ist, vorzugsweise außen liegend ist und im Konterdruck bedruckt ist.

12. Verpackungsfolie (110) nach einem der Ansprüche 6 bis 11, **dadurch gekennzeichnet, dass** sie eine Siegelschicht (150) besitzt.

13. Verpackungsfolie (110) nach einem der Ansprüche 6 bis 12, **dadurch gekennzeichnet, dass** sie eine Gas-, Aroma- oder Feuchtigkeitssperrschicht enthält, insbesondere innerhalb der Siegelschicht (150).

14. Anordnung aus einer Verpackung (100) nach einem der Ansprüche 1 bis 5 oder einem Produktdisplay für mit der Verpackung (100) verpackte Produkte und einer Vorrichtung (1) zur Ausgabe optischer oder akustischer Informationen, wobei die Vorrichtung (1) wenigstens einen Infrarotsensor (3) aufweist, der zum Scannen mindestens eines auf der Verpackung (100) angeordneten Codemusters (4, 5) eingerichtet ist, und wobei die Vorrichtung (1) eine mit dem Sensor (3) verbundene Auswerteeinheit (6) hat, die zum Ermitteln einer Code-Information aus dem gescannten Codemuster (4, 5) eingerichtet ist und einen mit der Auswerteeinheit (6) verbundenen Speicher (7) zum Hinterlegen optischer und/oder akustischer Informationen aufweist, wobei die Auswerteeinheit (6) zum Ermitteln mindestens einer in den Speicher (7) hinterlegten Information in Abhängigkeit der ermittelten Code-Informationen ausgebildet und die Vorrichtung (1) zur Ausgabe der ermittelten Informationen eingerichtet ist.

15. Anordnung nach Anspruch 14, **dadurch gekennzeichnet, dass** die Vorrichtung (1) ein mobiles Handgerät ist.

16. Anordnung nach Anspruch 14 oder 15, **dadurch gekennzeichnet, dass** die Auswerteeinheit (6) der Vorrichtung (1) zur Ermittlung der Code-Informationen des gescannten Codemusters (4, 5) mittels eines Bilderkennungsverfahrens eingerichtet ist.
